# EUROPÄISCHE PATENTANMELDUNG

(11) **EP 1 480 307 A1**
(43) Veröffentlichungstag der Anmeldung: **24.11.2004**
(21) Anmeldenummer: 04012000.8
(22) Anmeldetag: 21.05.2004
(51) Int. Cl.: H02B 1/052

(54) **Montageadapter zum Aufrasten auf eine Tragschiene**

(30) Priorität: 23.05.2003 DE 20308255 U
(71) Anmelder: Weidmüller Interface GmbH & Co. KG, 32760 Detmold (DE)
(72) Erfinder: Tudora, Denisa-Paloma, Pickering, ON L3P7P4 (CA); Robinson, Don, Markham, ON L3P7P4 (CA); Gradin, Ernesto, Markam, ON L3P7P4 (CA); Graham, Steven, Pickering, ON L3P7P4 (CA)
(74) Vertreter: Specht, Peter, Dipl.-Phys.

(57) **Zusammenfassung**

Auf eine Tragschiene aufrastbarer Montageadapter zum Aufsetzen elektrischer und/oder elektronischer Geräte und/oder einer weiteren Montageeinrichtung wie einer Grundplatte, mit einer plattenförmigen Basisplatte (7), an welcher erste Rastfüße (3a,b) angeordnet sind, wobei ein separat zur Basisplatte ausgebildetes Schieberelement (8) an der Basisplatte (7) geführt ist, welches weitere Rastfüße (4a, b) aufweist und mittels einer Federeinrichtung (10), die sich an der Basisplatte (7) und dem Schieberelement (8) abstützt, in dem Durchbruch (9) in Richtung der Tragschiene (2) vorgespannt angeordnet ist, zeichnet sich dadurch aus, dass die plattenförmige Basisplatte (7) einen fensterartigen Durchbruch (9) aufweist, in welchem das Schieberelement (8) relativ zur Basisplatte (7) und zur Tragschiene (2) verschieblich geführt ist, und dass das Schieberelement balkenartig (8) ausgebildet ist, sich über mehr als die Hälfte der Baubreite in Tragschienerichtung der Basisplatte (8) erstreckt und zumindest zwei voneinander beabstandete Rastfüße (4a,b ) aufweist, welche sich vorzugsweise bis in die äußeren Randbereiche des Schieberelementes erstrecken.

## Beschreibung

Die Erfindung betrifft einen auf eine Tragschiene aufrastbaren Montageadapter zum Aufsetzen elektrischer und/oder elektronischer Geräte und/oder einer weiteren Montageeinrichtung wie einer Grundplatte, nach dem Oberbegriff des Anspruchs 1.

Derartige Montageadapter sind in verschiedenen Ausführungsformen bekannt, so aus der DE 202 16 516 U1. Schnappvorrichtungen zum rastenden Aufsetzen von Gehäusen auf eine Tragschiene sind zudem aus der EP 0 883 209 B1, der DE AS 23 38 526 und der DE 38 02 074 C2 bekannt.

Es ist die Aufgabe der Erfindung, einen kostengünstig herstellbaren und besonders sicher an der Tragschiene gehaltenen Montageadapter zu schaffen, der vorzugsweise auch besonders flach baut, so dass er relativ zur Tragschiene nach oben hin besonders wenig Bauraum benötigt.

Die Erfindung löst diese Aufgabe durch den Gegenstand des Anspruchs 1.

Relativangaben, welche sich in den Ansprüchen auf die Tragschiene beziehen, welche an sich nicht zum Montageadapter gehört, beziehen sich auf die Montagestellung des Montageadapters, also auf den aufgerasteten Zustand auf der Tragschiene.

Danach weist die Basisplatte einen fensterartigen Durchbruch auf, in welchem das Schieberelement relativ zur Basisplatte und zur Tragschiene verschieblich geführt ist, und das Schieberelement ist balkenartig ausgebildet, es erstreckt sich über mehr als die Hälfte der Baubreite - in Tragschienenrichtung - der Basisplatte und es weist zumindest zwei voneinander beabstandete Rastfüße auf, welche sich vorzugsweise bis in die äußeren Randbereiche des Schieberelementes bzw. bis nahe an diese heran erstrecken. Diese Ausgestaltung ermöglicht u.a. eine sehr gute Sicherung und einen sehr guten Sitz des Montageadapters an der Tragschiene aufgrund der weit voneinander beabstandeten oder entsprechend lang bauenden Rastfüße. Besonders bevorzugt ist das Schieberelement dabei auf einfache Weise von oben - relativ zur Montagestellung auf der Tragschiene - in den Durchbruch in der Basisplatte einsetzbar. Damit ist der Montageadapter besonders leicht montierbar und kostengünstig herstellbar.

Vorzugsweise entspricht die Bauhöhe des Schieberelementes nahezu der Höhe des Durchbruchs und damit der Bauhöhe der Basisplatte senkrecht zur Tragschiene. Diese Maßnahme ermöglicht insgesamt eine geringe Bauhöhe des Montageadapters, da die gesamte Bauhöhe der Basisplatte für das Schieberelement und dessen Funktionsbereiche (Vorsprünge und dgl.) genutzt wird. Da das Schieberelement nicht ganz die Bauhöhe der Basisplatte erreicht - vorzugsweise bleibt ein gewisser Abstand der Oberseite des Schieberelementes relativ zur Oberseite der Basisplatte von z.B. vorzugsweise bis zu 0,2 mm erhalten, um ein Verklemmen zu verhindern.

Bevorzugt weist der Montageadapter als Federeinrichtung wenigstens eine, vorzugsweise zwei oder mehr Schraubenfedern auf, welche mit ihren einen Enden auf korrespondierende Zapfen am Schieberelement aufgesetzt sind und welche sich mit ihren gegenüberliegenden Enden an der Basisplatte abstützen. Insbesondere bei einer Ausgestaltung mit zwei voneinander beabstandeten Federn wird ein definierter und gleichmäßiger Vorschub und damit ein besonders guter Sitz beider Rastfiiße an den korrespondierenden Tragschienenrändem gesichert. Ergänzend trägt diese Anordnung ferner zur leichten Montierbarkeit bei.

Vorzugsweise weisen die fixen, als Widerlager ausgebildeten Rastfüße und oder auch die beweglichen Rastfiiße jeweils gemeinsam eine Erstreckung in Richtung der Tragschiene auf, welche mehr als die Hälfte der gesamten Breite des Montageadapters beträgt, um dieses besonders effektiv an der Tragschiene zu sichern.

Besonders bevorzugt erstreckt sich das Schieberelement über mehr als 2/3 der Breite der Basisplatte, um einen genügenden Abstand und/oder eine genügende Breite der Rastfüße realisieren zu können.

An das Schieberelement kann nach einer zeichnerisch nicht dargestellten Variante eine Stange oder ein stangenartiger Abschnitt angeformt oder angesetzt sein, welcher die Basis durchsetzt und eine Betätigung mittels eines Schraubendrehers oder dgl. von außen erlaubt. Bevorzugt wird aber eine werkzeugfreie Betätigung einfach durch Aufrasten auf eine Tragschiene.

### Zusammengefasst ergeben sich u.a. folgende Vorteile:

Eine Montage an der Tragschiene ist je nach Auslegung ohne Werkzeug auf verschiedensten Tragschienen, insbesondere DIN 35 mm mit verschieden Dicken "Hutschienenteilen" , möglich. Es ergibt sich ein stabiler, gespannter Sitz auf der Tragschiene, der praktisch spielfrei sein kann. Der Montageadapter baut sehr flach und hält sicher auf Tragschienen verschiedenster Art.

Weitere vorteilhafte Ausgestaltungen sind den übrigen Unteransprüchen zu entnehmen und/oder in der Figurenbeschreibung erläutert.

Nachfolgend wird die Erfindung unter Bezug auf die Zeichnung näher beschrieben. Es zeigt:
- Fig. 1: eine perspektivische Ansicht des oberen, von der Tragschiene abgewandten Bereiches eines erfindungsgemäßen Montageadapters;
- Fig. 2: eine perspektivische Ansicht des unteren, zur Tragschiene gewandten Bereiches des Montageadapters aus Fig. 1;
- Fig. 3a.c: Schnitte durch den Montageadapter aus Fig. 1 und 2 in verschiedenen Betriebsstellungen sowie in Fig. 3b im auf eine Tragschiene aufgerasteten Zustand;
- Fig. 4, 5: den Montageadapter aus Fig. 1 und 2 während zwei aufeinander folgender Montageschritte; und
- Fig. 6, 7: den Montageadapter aus Fig. 1 und 2 in seinem auf die Tragschiene 2 auf gerasteten Zustand in zwei verschiedenen perspektivischen Ansichten;
- Fig. 8: eine perspektivische Ansicht der Basisplatte des Montageadapters aus Fig. 1;
- Fig. 9: eine perspektivische Ansicht des Schieberelementes des Montageadapters aus Fig. 1;
- Fig. 10, 11: eine perspektivische Ansicht und eine Schnittansicht des Montageadapters im Einbauzustand an einer Tragschiene mit einer aufgeschraubten Träger oder Grundplatte für eine Elektronik oder dgl..

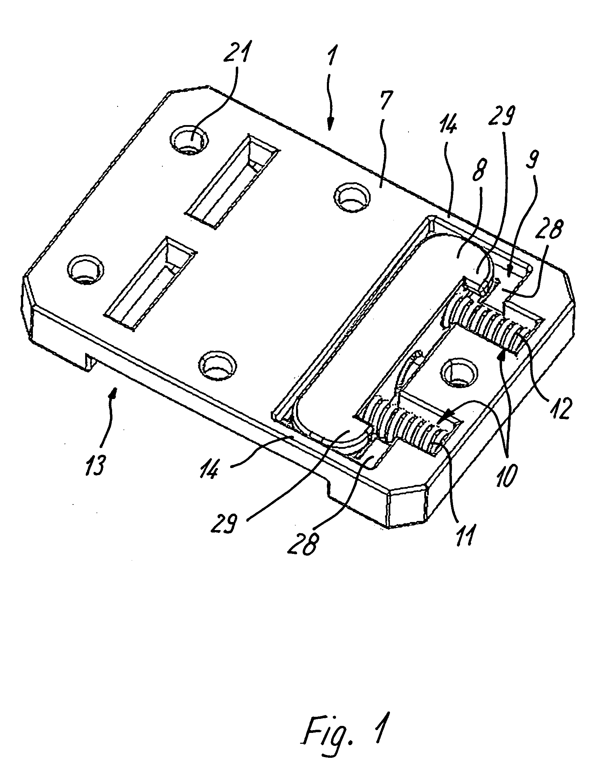

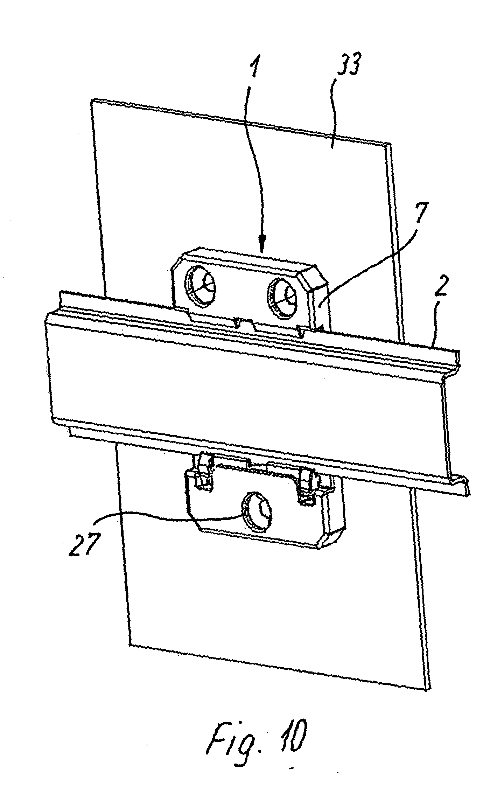

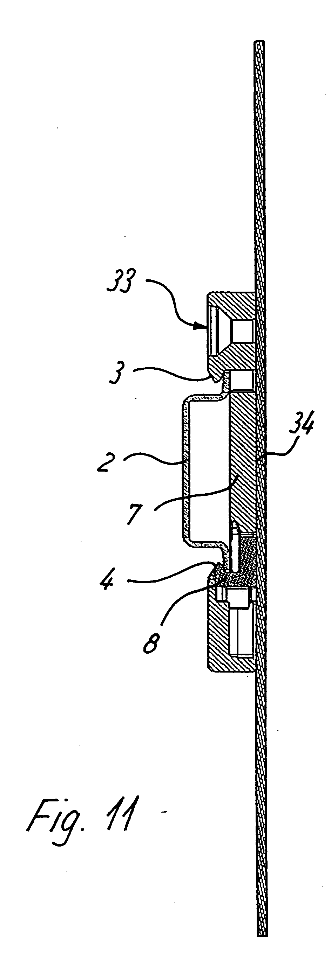

Fig. 1 zeigt einen Montageadapter 1 zur Befestigung - insbesondere zum Aufschrauben - eines (hier nicht dargestellten) elektrischen und/oder elektrischen Gerätes oder zur Befestigung einer Trägerplatte, auf welche dann ein Elektronikaufbau aufgebracht werden kann (siehe auch Fig. 10 und 11 und die Erläuterungen zu diesen Fig.). Der Begriff des elektrischen und/oder elektronischen Gerätes ist hier weit zu fassen, es werden darunter alle auf den Adapter aufsetzbaren Geräte verstanden, welche wenigstens einen elektrischen Leiter und/oder elektrische Bauelemente aller Art wie z.B. Stromschienen, Widerstände, Anschlussklemmen, Transistoren, ganze Elektronikchips oder dgl. umfassen. Insbesondere werden unter den Begriff des elektrischen Gerätes Klemmen aller Art, sowie sonstige Einrichtungen wie Schütze, Relaissockel und dgl. gefasst.

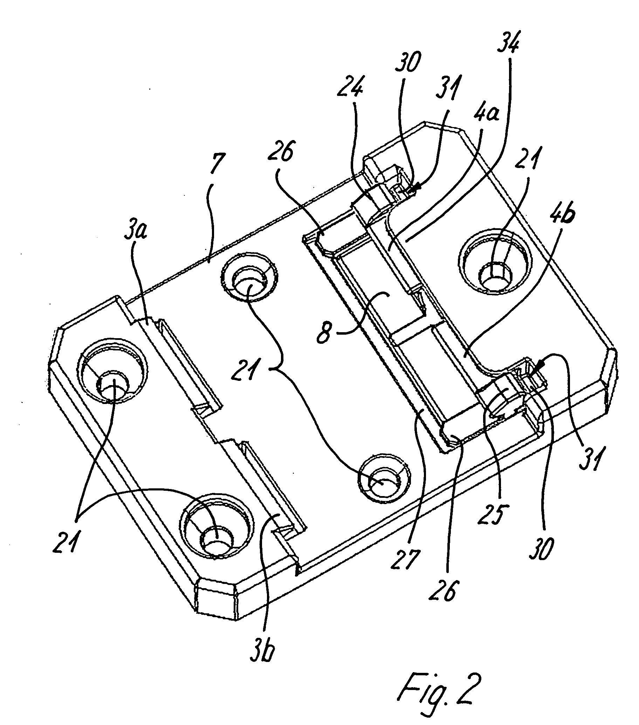

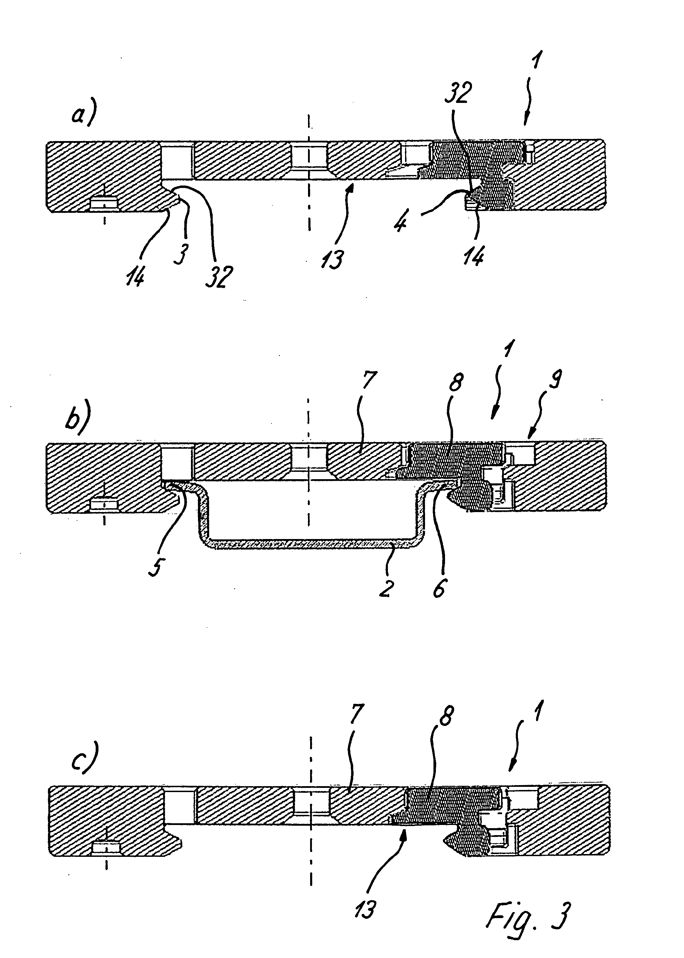

Der Montageadapter 1 ist zum Aufrasten auf eine hutförmige Tragschiene 2 (siehe z.B. Fig. 3b; 35 mm DIN Schiene) ausgelegt. Hierzu weist er beidseits der Tragschiene 2 auf seiner in der Montagestellung zur Tragschiene gewandten Seite (siehe Fig. 2) jeweils zwei voneinander beabstandete, hakenartige Rastfiiße 3a,b; 4 a, b auf, welche zum Hintergreifen der Tragschienenränder 5, 6 ausgelegt sind. Auf der Tragschiene 2 können mehrere der Montageadapter 1 aneinandergereiht werden.

Die jeweils zwei oder mehr Rastfiiße 3a,b; 4a,b auf jeder Seite der Tragschiene 2 sind derart weit voneinander beabstandet angeordnet, bevorzugt in den Nähe der Seiten bzw. in der Nähe der Ränder einer flach bauenden Basisplatte 7 und derart lang ausgebildet, dass der Montageadapter 1 besonders kippsicher an der Tragschiene 2 befestigt wird.

Zwei der Rastfüße 3a, b an einem der Randabschnitte der Tragschiene 2 sind an die Unterseite der plattenartigen Basisplatte 7 des Montageadapters 1 angeformt oder an dieser unbeweglich fixiert und bilden derart ein Widerlager für die Rastfiiße 4a,b auf der gegenüber liegenden Seite der Tragschiene 2.

Dabei weisen die fixen, als Widerlager ausgebildeten Rastfiiße 3a, b gemeinsam eine Erstreckung in Richtung der Tragschiene 2 auf, welche mehr als die Hälfte der gesamten Breite des Montageadapters 1 beträgt. Sie fixieren damit die Basisplatte 7 in diesem Bereich sicher an der Tragschiene 2.

Die gegenüberliegenden, korrespondierenden Rastfüße 4a,b sind dagegen an ein bewegliches Schieberelement 8 bzw. eine Schieber- oder Gleitplatte angeformt bzw. an diesem angeordnet, welches in einem fensterartigen Durchbruch 9 der Basisplatte 7 beweglich, insbesondere verschieblich geführt ist. Sie können eine Erstreckung in Richtung der Tragschiene aufweisen, welche jener der Rastfiiße 3a,b an der Basisplatte 7 entspricht.

Zwischen der Basisplatte 7 und dem Schieberelement 8 ist eine Federeinrichtung 10 mit wenigstens einer, hier vorteilhaft zwei parallel zueinander ausgerichteten Schraubenfedem 11, 12 angeordnet, welche das Schieberelement 8 in Richtung des korrespondierenden Tragschienenrandes 6 in seinen Randbereichen federnd vordrücken, so dass der zweite Rand der Tragschiene 2 in der Montagestellung der Fig. 3b mit federnder Vorspannung von den an diesem Tragschienenrand 6 angeordneten Rastfüßen 4a, b hintergriffen wird.

Die Basisplatte 7 weist an ihrer zur Tragschiene 3 gewandten Seite eine der Breite der Tragschiene 2 entsprechende Aussparung 13 auf, in welche der obere Bereich der Tragschiene mit den Tragschienenrändern 5, 6 einführbar ist. Dabei sind an die eine Innenwand der Aussparung 13 die zwei fixen, unbeweglichen Montagefüße 3a, 3b angeformt. An der gegenüberliegenden Seite der Aussparung 13 wird diese von dem in den fensterartigen Durchbruch 9 eingesetzten Schieberelement 8 und dessen Rastfüßen 4a, b begrenzt. Anschrägungen 14 (siehe Fig. 3c) an allen oder einem Teil der Rastfüße 3a,b; 4a, b erleichtern das Aufschieben und Aufrasten des Montageadapters 1 auf die Tragschiene 2. Es können auch noch oben hin Anschrägungen 32 vorgesehen sein, um eine möglichst universelle Einsetzbarkeit mit verschiedensten Tragschienenrändern zu sichern.

Der Durchbruch 9 durchsetzt die Basisplatte 7 senkrecht zur Tragschiene 2 vollständig, so dass das Schieberelement 8 bei der Montage von oben her in die Basisplatte 7 einsetzbar ist. Die Bauhöhe des Schieberelementes 8 senkrecht zur Tragschiene 2 entspricht dabei hier nahezu der Bauhöhe der Basisplatte 7, bis auf max. 0,2 mm Spiel, um ein Verkanten zu vermeiden.

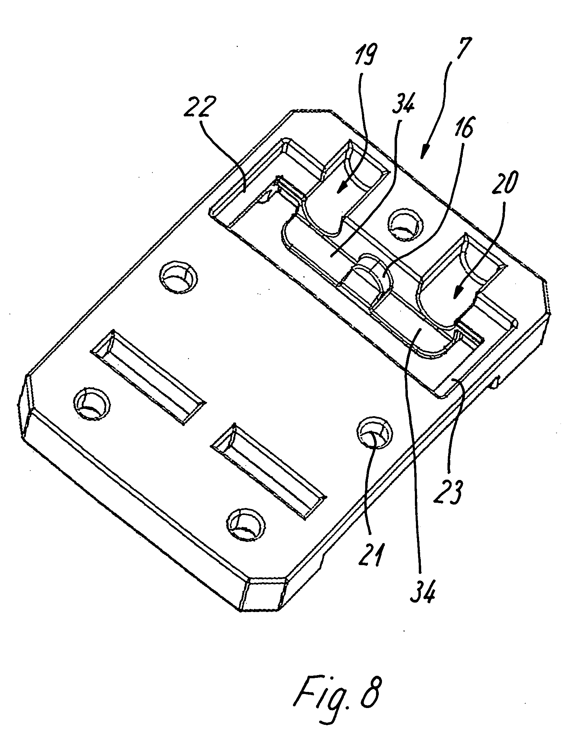

Absätze 22, 23 in den Seitenbereichen des Durchbruches 9 (siehe auch Fig. 8) dienen der Auflage der Seitenbereiche des Schieberelementes 8 sowie als Führungsflächen für das Schieberelement 8 , so dass dieses nicht durch den Durchbruch 9 nach unten ausfallen kann. Die Absätze 22, 23 ermöglichen zudem eine leichte und definierte Schiebbarkeit des Schieberelementes 8 in dem Durchbruch 9 an der Basisplatte 7.

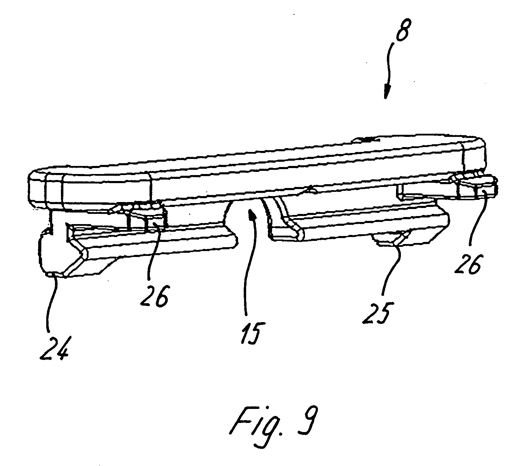

Seitlich der Absätze 22, 23- siehe auch Fig. 9 - ist das Schieberelement 8 seinerseits mit unteren Führungsansätzen 24, 25 versehen, welche an den Innenseiten der Absätze 22, 23 anliegen und so die Führung des Schieberelementes 8 weiter verbessern.

Oberhalb der Führungsansätze 24, 25 in dem zur Tragschiene gewandten Bereich des Schieberelementes 8 sind in dem vorderen, zur Tragschiene hin gewandten Bereich des Schieberelementes 8 ferner angeschrägte Vorsprünge 26 mit Rastclipfunktion vorgesehen, welche sich in Richtung der Tragschiene 2 erstrecken und korrespondierende Stufungen 27 in der Basisplatte 8 federnd untergreifen bzw. hintergreifen, was das Schieberelement 8 in der Basisplatte 7 sichert.

Jeweils zwei weitere Absätze 28, 34 jeweils in dem von der Tragschiene abgewandten Bereich der Aussparung stützen das Schieberelement in seiner vollständig zurückgezogenen Position der Fig. 3a zusätzlich ab. Auf den Absätzen 28 liegen die Ränder 29 des Schieberelement 8 in einer Betriebsstellung auf und auf den Absätzen 28, 34 der rückwärtige, von der Tragschiene 8 abgewandte Teil des Schieberelementes 8 auf, was das Schieberelement 8 zusätzlich an der Basisplatte 7 sichert und führt.

Das Schieberelement 8 weist an seiner von der Tragschiene 2 abgewandten Seite eine Aussparung 15 auf, welche auf einem korrespondierenden mittleren Vorsprung oder Zapfen 16 verschieblich geführt ist. Dies ermöglicht eine besonders definierte Führung des Schieberelementes 8 an der Basisplatte 7, insbesondere bei einer Bewegung des Schieberelementes 8 zu der äußeren Kante des Durchbruches 9.

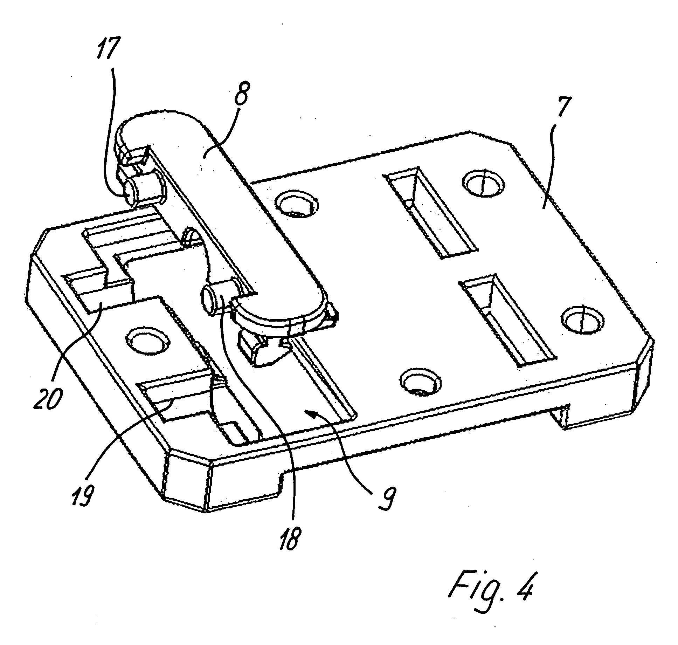

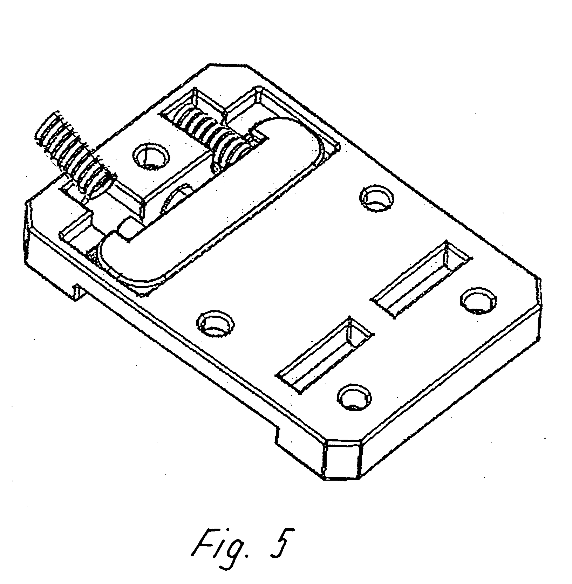

Das Schieberelement 8 ist an seiner von der Tragschiene abgewandten Seite - siehe hierzu Fig. 4 - ferner mit zwei äußeren Zapfen 17, 18 versehen, auf welche die Schraubenfedem 11, 12 nach dem Einsetzen des Schieberelementes 8 in die Basisplatte 7 aufsetzbar sind - siehe hierzu die Montagestellung der Fig. 5 -, welche in korrespondierende, hier halbzylindrische Aussparungen 19, 20 der Basisplatte 7 eingreifen und sich dort an der Basisplatte 7 abstützen. Diese Maßnahme verbessert die Führung des Schieberelementes 8 an der Basisplatte 7 weiter und erleichtert die Montage des gesamten Montageadapters 1, da die Federn 11, 12 leicht von oben nach der Montage des Schieberelementes 8 aufgesetzt werden können (Fig. 5). Abgerundete Ecken des Schieberelementes 8 dienen dazu, dessen Verkanten bei Bewegungen desselben zu verhindern.

Führungen 30 in zwei seitlichen Randaussparungen 31 der Basisplatte 7 in der von der Tragschiene abgewandten Seite des Durchbruches 9 dienen der ergänzenden Führung der Führungselemente 24, 25 der Basisplatte 8.

Das balkenartig ausgebildete Schieberelement 8 erstreckt sich hier sehr vorteilhaft nahezu über die gesamte Breite der Basisplatte 7, bis auf den Bereich seitlicher Wandungen 14, vorzugsweise über mehr als 2/3 der Breite der Basisplatte 7, was wiederum zu einem besonders kippsicheren Sitz auf der Tragschiene 2 beiträgt. Das Schieberelement 8 kann aus einem metallischen Material bestehen und dann auch zur Erdung genutzt werden oder aus einem Kunststoff wie die ebenfalls bevorzugt aus Kunststoff bestehende Basisplatte 7.

Auf ihrer von der Tragschiene 2 abgewandten Seite ist die Basisplatte 7 mit mehreren - hier fünf - Befestigungslöchern 21 und/oder sonstigen Befestigungselementen für korrespondierende Befestigungselemente, z.B. Rastzapfen, des elektrischen Gerätes bzw. auch verschiedener elektrischer Geräte versehen. Sie kann auch Rastmittel, insbesondere Rastfelder für Markierungen und dgl. aufweisen (hier nicht dargestellt).

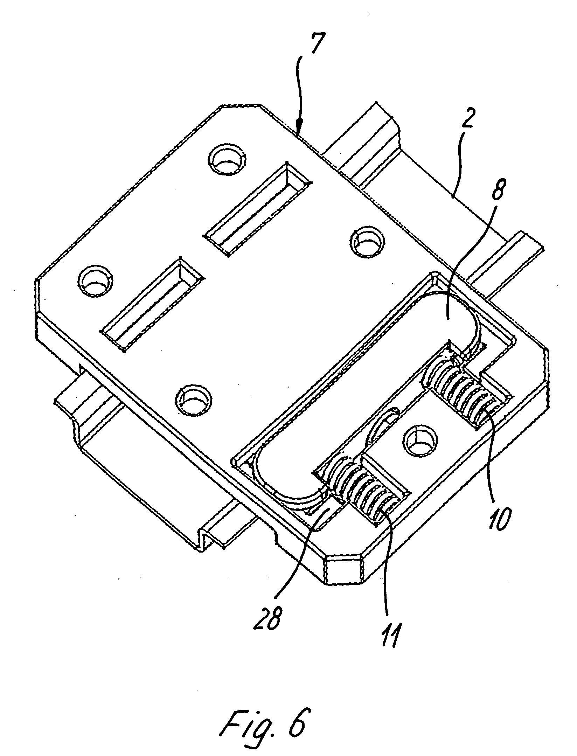

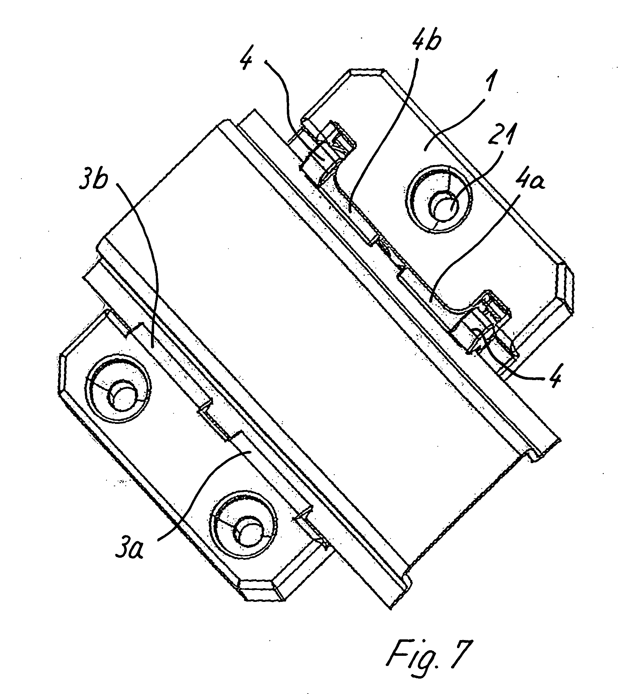

Den Montageadapter in seiner auf die Tragschiene 2 aufgerasteten Zustand zeigen die Figuren 3b, 6 und 7 sowie 10 und 11.

Bei der Montage muss lediglich das Schieberelement 8 von oben senkrecht in den Durchbruch 9 der Basisplatte 7 eingesetzt werden - Fig. 4 -, bis er auf den Ansätzen aufliegt und dann nach vorne verschoben werden, bis die Führungsansätze 24, 25 einrasten, woraufhin die Federn 11, 12 in den Ausnehmungen 19, 20 auf die Zapfen 17, 18 aufgeschoben werden - Fig. 5 -, was den schnellen und besonders einfach realisierbaren Zusammenbau des Montageadapters 1 vervollständigt.

Auf den Montageadapter ist mittels mehrerer Schrauben (siehe den Lochdurchschnitt 33) z.B. ein Gerät, eine Gerätegruppe oder eine Trägerplatte 34 mit Gehäusen und dgl. aufschraubbar, welche dann mit einem Montageadapter 1 gemeinsam auf die Tragschiene 2 gesetzt wird.

Die verschiedenen Stellungen des Schieberelementes 8 veranschaulicht Fig. 3. Nach Fig. 3a ist das Schieberelement 8 in dem Durchbruch 9 maximal von der Tragschiene beabstandet. Nach Fig. 3b liegt es dagegen federvorgespannt an dem Rand des zur Tragschiene 2 gewandten Randes des Durchbruchs 9. Beim Aufrasten auf die Tragschiene gleiten die Tragschienenränder 5, 6 an den Anschrägungen 14 der Rastfüße 3a,b; 4a,b entlang, wobei das Schieberelement 8 entgegen der Kraft der Federn 11, 12 in dem Durchbruch 9 von der Tragschiene 2 fort bewegt wird, bis die Rastfüße 4a,b den Tragschienenrand schnappend hintergreifen, wobei das Schieberelement 8 durch die Federkraft der Federn 11, 12 selbsttätig in die Raststellung der Fig. 3b bzw. Fig. 6 und 7 bewegt wird.

Das Schieberelement 8 ist in dem Durchbruch 9 nicht nur um den zum Aufrasten auf die Tragschiene 2 erforderlichen Weg verschieblich, sondern über diesen Weg hinaus (Fig. 3a).

### Bezugszeichen

- Montageadapter: 1
- Tragschiene: 2
- Rastfüße: 3a,b; 4, a,b
- Randabschnitten: 5,6
- plattenförmige Basisplatte: 7
- Schieberelement: 8
- fensterartiger Durchbruch: 9
- Federeinrichtung: 10
- Schraubenfedern: 11, 12
- Aussparung: 13
- Anschrägungen: 14
- Aussparung: 15
- Vorsprung: 16
- Zapfen: 17, 18
- Aussparungen: 19, 20
- Befestigungslöcher: 21
- Absätze: 22, 23
- Führungsansätze: 24, 25
- Vorsprünge: 26
- Stufungen: 27
- Absatz: 28
- Ränder: 29
- Führungen: 30
- Randaussparungen: 31
- Anschrägungen: 32
- Lochdurchschnitt: 33
- Trägerplatte: 34

## Patentansprüche

1. Auf eine Tragschiene aufrastbarer Montageadapter zum Aufsetzen elektrischer und/oder elektronischer Geräte und/oder einer weiteren Montageeinrichtung wie einer Grundplatte,
a) mit einer plattenförmigen Basisplatte (7), an welcher erste Rastfiiße (3a,b) angeordnet sind,
b) wobei ein separat zur Basisplatte ausgebildetes Schieberelement (8) an der Basisplatte (7) geführt ist, welches weitere Rastfiiße (4a, b) aufweist und mittels einer Federeinrichtung (10), die sich an der Basisplatte (7) und dem Schieberelement (8) abstützt, in dem Durchbruch (9) in Richtung der Tragschiene (2) vorgespannt angeordnet ist,
**dadurch gekennzeichnet, dass**
c) die plattenförmige Basisplatte (7) einen fensterartigen Durchbruch (9) aufweist, in welchem das Schieberelement (8) relativ zur Basisplatte (7) und zur Tragschiene (2) verschieblich geführt ist, und
d) das Schieberelement balkenartig (8) ausgebildet ist, sich über mehr als die Hälfte der Baubreite in Tragschienerichtung der Basisplatte (8) erstreckt und zumindest zwei voneinander beabstandete Rastfüße (4a,b ) aufweist, welche sich vorzugsweise bis in die äußeren Randbereiche des Schieberelementes erstrecken.

2. Montageadapter nach Anspruch 1, **dadurch gekennzeichnet, dass** die Bauhöhe des Schieberelementes (8) nahezu der Höhe des Durchbruchs (9) und damit der Bauhöhe der Basisplatte (7) senkrecht zur Tragschiene (2) entspricht.

3. Montageadapter nach Anspruch 2, **dadurch gekennzeichnet, dass** die Bauhöhe des Schieberelementes (8) bis zu 0,2mm geringer ist als die Bauhöhe der Basisplatte (7).

4. Montageadapter nach Anspruch 2 oder 3, **dadurch gekennzeichnet, dass** das Schieberelement (8) von oben - relativ zur Montagestellung auf der Tragschiene (2) - in den Durchbruch (9) in der Basisplatte (7) einsetzbar ist.

5. Montageadapter nach einem der vorstehenden Ansprüche, **dadurch gekennzeichnet, dass** das Schieberelement (8) als Federeinrichtung (11) wenigstens eine, vorzugsweise zwei oder mehr Schraubenfedern (11, 12 ) aufweist, welche mit ihren einen Enden auf korrespondierende Zapfen (17, 18) am Schieberelement (8) aufgesetzt sind und welche sich mit ihren gegenüberliegenden Enden an der Basisplatte (7) abstützen.

6. Montageadapter nach einem der vorstehenden Ansprüche, **dadurch gekennzeichnet, dass** die fixen, als Widerlager ausgebildeten Rastfüße (3a, b) gemeinsam eine Erstreckung in Richtung der Tragschiene (2) aufweisen, welche mehr als die Hälfte der gesamten Breite des Montageadapters ( 1 ) beträgt.

7. Montageadapter nach einem der vorstehenden Ansprüche, **dadurch gekennzeichnet, dass** die Basisplatte (7) in den Seitenbereichen des Durchbruches (9) mit Absätzen (22, 23) zur Auflage der Seitenbereiche des Schieberelementes (8) versehen ist.

8. Montageadapter nach einem der vorstehenden Ansprüche, **dadurch gekennzeichnet, dass** das Schieberelement (8) mit unteren hakenartigen Führungsansätzen (24, 25) versehen ist, welche vorzugsweise an den Innenseiten der Absätze (22, 23) anliegen.

9. Montageadapter nach einem der vorstehenden Ansprüche, **dadurch gekennzeichnet, dass** oberhalb der Führungsansätze (24, 25) des Schieberelementes (8) in dessen vorderen, zur Tragschiene hin gewandten Bereich angeschrägte Rastvorsprünge (26) ausgebildet sind, welche korrespondierende Stufungen (28) in der Basisplatte (8) hintergreifen und das federvorgespannte Schieberelement (8) in der Basisplatte (7) sichern.

10. Montageadapter nach einem der vorstehenden Ansprüche, **dadurch gekennzeichnet, dass** weitere Absätze (28, 34) an der von der Tragschiene (2) abgewandten Seite der Basisplatte (9) als weitere Auflagefläche(n) für das Schieberelement (8) vorgesehen sind.

11. Montageadapter nach einem der vorstehenden Ansprüche, **dadurch gekennzeichnet, dass** sich das Schieberelement (8) und der Durchbruch (9) über mehr als 2/3 der Breite der Basisplatte (7) in Tragschienenrichtung erstreckt.

12. Montageadapter nach einem der vorstehenden Ansprüche, **dadurch gekennzeichnet, dass** das Schieberelement (8) aus einem metallischen Material besteht.

13. Montageadapter nach einem der vorstehenden Ansprüche, **dadurch gekennzeichnet, dass** die Basisplatte (7) mit Befestigungslöchern (21) - vorzugsweise drei oder fünf- und/oder sonstigen Befestigungselementen für korrespondierende Befestigungselemente des elektrischen Gerätes versehen ist.

14. Montageadapter nach einem der vorstehenden Ansprüche, **dadurch gekennzeichnet, dass** der Durchbruch (9) und das Schieberelement (9) derart bemessen sind, dass das Schieberelement (8) in dem Durchbruch (9) über den zum Aufrasten auf die Tragschiene (2) erforderliche Spiel verschieblich ist.

15. Montageadapter nach einem der vorstehenden Ansprüche, **gekennzeichnet durch** eine Ausbildung derart, dass auf der Tragschiene (2) mehrere der Montageadapter (1) aneinanderreihbar sind.

16. Montageadapter nach einem der vorstehenden Ansprüche, **dadurch gekennzeichnet, dass** das Schieberelement (8) abgerundete Ecken aufweist.

17. Montageadapter nach einem der vorstehenden Ansprüche, **gekennzeichnet durch** Rastmittel, insbesondere Rastfelder, für Markierungen und dgl..

18. Montageadapter nach einem der vorstehenden Ansprüche, **gekennzeichnet durch** eine Ausbildung derart, dass an das Schieberelement (8) eine Stange oder ein stangenartiger Abschnitt angeformt oder angesetzt ist, welcher die Basisplatte (7) durchsetzt und eine Betätigung mittels eines Schraubendrehers oder dgl. von außen erlaubt.

19. Montageadapter nach einem der vorstehenden Ansprüche, **gekennzeichnet durch** zwei Führungen (30) für die Führungsansätze des Schieberelementes (8) in zwei Randaussparungen (31) der Basisplatte (7) an dem von der Tragschiene abgewandten Ende des Durchbruches (9).
